# EUROPÄISCHE PATENTSCHRIFT

(11) **EP 3 776 708 B1**
(45) Veröffentlichungstag und Bekanntmachung des Hinweises auf die Patenterteilung: **29.06.2022**
(21) Anmeldenummer: 19716894.1
(22) Anmeldetag: 11.04.2019
(51) Int. Cl.: H01M 4/90, H01M 8/18, C25B 9/23, C25B 11/04, H01M 8/1018

(54) **KATALYSATORMATERIAL FÜR EINE BRENNSTOFFZELLE ODER EINEN ELEKTROLYSEUR SOWIE HERSTELLUNGSVERFAHREN FÜR EIN SOLCHES**
CATALYST MATERIAL FOR A FUEL CELL OR AN ELECTROLYSER, AND METHOD OF PRODUCING THE SAME
MATÉRIAU CATALYSEUR POUR UNE PILE À COMBUSTIBLE OU ÉLECTROLYSEUR AINSI QUE SON PROCÉDÉ DE FABRICATION

(30) Priorität: 13.04.2018 EP 18167304
(43) Veröffentlichungstag der Anmeldung: 17.02.2021
(73) Patentinhaber: Technische Universität Berlin, 10623 Berlin (DE)
(72) Erfinder: DRESP, Sören, 14467 Potsdam (DE); KLINGENHOF, Malte, 12203 Berlin (DE); STRASSER, Peter, 10629 Berlin (DE)
(74) Vertreter: Gulde & Partner
(86) Internationale Anmeldenummer: PCT/EP2019/059197
(87) Internationale Veröffentlichungsnummer: WO 2019/197513

(56) Entgegenhaltungen:
- HUANG JINGWEI ET AL: "Mn-doping and NiFe layered double hydroxide coating: Effective approaches to enhancing the performance of [alpha]-Fe2O3in photoelectrochemical water oxidation", JOURNAL OF CATALYSIS, ACADEMIC PRESS, DULUTH, MN, US, Bd. 340, 21. Juni 2016 (2016-06-21), Seiten 261-269, XP029649037, ISSN: 0021-9517, DOI: 10.1016/J.JCAT.2016.05.007 in der Anmeldung erwähnt
- FLEGLER ANDREAS ET AL: "Towards core-shell bifunctional catalyst particles for aqueous metal-air batteries: NiFe-layered double hydroxide nanoparticle coatings on [gamma]-MnO2microparticles", ELECTROCHIMICA ACTA, ELSEVIER SCIENCE PUBLISHERS, BARKING, GB, Bd. 231, 4. Februar 2017 (2017-02-04), Seiten 216-222, XP085134156, ISSN: 0013-4686, DOI: 10.1016/J.ELECTACTA.2017.01.179 in der Anmeldung erwähnt
- NING FANYU ET AL: "TiO 2 /graphene/NiFe-layered double hydroxide nanorod array photoanodes for efficient photoelectrochemical water splitting", ENERGY & ENVIRONMENTAL SCIENCE, RSC PUBL, CAMBRIDGE , Bd. 9, Nr. 8 1. Januar 2016 (2016-01-01), Seiten 2633-2643, XP009507735, ISSN: 1754-5692, DOI: 10.1039/C6EE01092J Gefunden im Internet: URL:http://xlink.rsc.org/?DOI=C6EE01092J [gefunden am 2016-01-01]
- Fanyu Ning ET AL: "TiO2/graphene/NiFe-layered double hydroxide nanorod array photoanodes for efficient photoelectrochemical water splittingElectronic supplementary information (ESI) available: Experimental and computational details and supplementary figures and tables are included. See DOI: 10.1039/c6ee01092j", , 2 August 2016 (2016-08-02), pages 2633-2643, XP055503324, DOI: 10.1039/c6ee01092j Retrieved from the Internet: URL:http://www.rsc.org/suppdata/c6/ee/c6ee 01092j/c6ee01092j1.pdf

## Beschreibung

Die Erfindung betrifft ein Katalysatormaterial für die Nutzung als Elektrode insbesondere in einer regenerativen Brennstoffzelle bzw. einer reversiblen Elektrolysezelle, sowie ein Verfahren zur Herstellung des Katalysatormaterials.

Die Nachfrage nach sauberen und erneuerbaren Energiespeichern und Energieumwandlungssystemen für mobile und stationäre Anwendungen steigt rasant. Eine regenerative Brennstoffzelle (engl.: Unitized Regenerative Fuel Cell (URFC)), ein Hybrid aus Elektrolyseur und Brennstoffzelle, bietet die Möglichkeit, Energie aus erneuerbaren Energiequellen (Solar-/Windkraftwerke) durch elektrochemische Spaltung von Wasser in Form von molekularem Wasserstoff zu speichern und bei Bedarf in elektrische Energie rückumzuwandeln. Wasser ist das einzige Nebenprodukt dieses Prozesses. Dies bietet die Möglichkeit, produzierte Überschussenergie umweltschonend zu speichern und bei Bedarf bereitzustellen. Dieser Prozess kann die Emission von Treibhausgasen (THG) bedeutend reduzieren und so einen wichtigen Beitrag zur Energiewende darstellen. Die Leistungsfähigkeit von Elektrolyseursystemen, Brennstoffzellen oder modularen regenerativen Brennstoffzellen hängt jedoch stark von der Geschwindigkeit (Kinetik) der ablaufenden elektrochemischen Reaktionen ab. Diese Reaktionen sind zum einen die Sauerstoff umwandelnden Prozesse (Sauerstoffprozesse), nämlich Sauerstoffevolutionsreaktion (engl.: Oxygen Evolution Reaction, OER) und Sauerstoffreduktionsreaktion (engl.: Oxygen Reduction Reaction, ORR), sowie die Wasserstoff umsetzenden Prozesse (Wasserstoffprozesse) an der Wasserstoffelektrode, nämlich Wasserstoffoxidationsreaktion (engl.: Hydrogen Oxidation Reaction, HOR) und die Wasserstoffevolutionsreaktion (engl.: Hydrogen Evolution Reaction, HER). Da es sich bei den Wasserstoffreaktionen um vergleichsweise einfache Zweistufenreaktionen handelt, werden die Gesamtprozesse durch die vergleichsweise schlechte Kinetik der vierstufigen elektrochemischen Sauerstoffreaktionen limitiert.

Aufgrund der Komplexität der genannten Sauerstoffprozesse bedarf es eines katalytischen Systems, welches OER und ORR effizient mit möglichst geringen Verlusten über lange Zeiträume katalysieren kann, um eine wettbewerbsfähige Alternative zu etablierten Energieträgern zu schaffen.

Die besten OER- und ORR-Katalysatoren unter sauren Bedingungen basieren auf Edelmetallen und deren Oxiden. Während Materialien auf der Basis von Iridium und Ruthenium am häufigsten in sauren Membran-basierten Elektrolyseursystemen (engl.: Proton Exchange Membrane Water Electrolyzer, PEMWE) verwendet werden, sind Platinlegierungen die besten Katalysatoren für Brennstoffzellenanwendungen in saurem Milieu. Der Nachteil dieser Materialien ist ihr geringes Vorkommen verbunden mit hohen Kosten, wodurch eine breitere Anwendung ausgeschlossen wird. Katalysatoren, die ausschließlich auf reichlich vorkommenden Übergangsmetalloxiden oder funktionalisierten Kohlenstoffen basieren, bieten vielversprechende Alternativen für zukünftige Aufgaben. Die Charakterisierung von Übergangsmetallkatalysatoren für die OER und die ORR ist daher ein wichtiger und aktueller Forschungsschwerpunkt.

Es hat sich herausgestellt, dass vor allem Interkalationsverbindungen bestehend aus Nickel und Eisen besonders effiziente OER-Katalysatoren sind. Besonders hervorzuheben sind NiFe Verbindungen, welche als so genannte Layered Double Hydroxide (LDH) vorliegen. Dresp et al. (S. Dresp, F. Luo, R. Schmack, S. Kühl, M. Gliech and P. Strasser, Energy Environ. Sc., 2016, 9, 2020-2024) zeigten, dass NiFe-LDH als OER-aktive Komponente in einem bifunktionellen Zweikomponenten-Katalysatorsystem geeignet ist. Leider zeigte das benannte System enorme Aktivitätsverluste während elektrochemischer Belastungstests, die auf die durch die hohen OER Potentiale verursachte Degradation der ORR-aktiven kohlenstoffbasierten Spezies zurückzuführen ist. Die Aktivität der OER-aktiven Komponente wurde dadurch nicht eingeschränkt. Für einen bifunktionellen Katalysator für die Anwendung in einer regenerativen Brennstoffzelle wird neben NiFe-LDH eine zweite hinreichend stabile ORR-aktive Komponente benötigt, da NiFe-LDH keine hinreichende ORR Aktivität besitzt.

Manganoxide, besonders Perovskite (Mn₂O₃) und Cryptomelan-Typ Oxide (MnO₂) zeigen ORR-Aktivitäten in alkalischen Medien, vergleichbar mit kommerziellem Pt/C. Die Nachteile dieser Oxide resultieren aus der Größe der Materialien einhergehend mit einer geringen Oberfläche, sowie einer schlechten elektrischen Leitfähigkeit. Diese Nachteile erfordern Modifikationen des Metalloxids und die Verwendung eines geeigneten, leitfähigen Trägermaterials mit großer Oberfläche. Die gebräuchlichsten Trägermaterialien sind "Carbon Blacks" wie Vulcan XC-72R, Graphen oder Carbon Nanotubes (CNT). Derartige Trägermaterialien führen aber im Hinblick auf ihre Kohlenstoffkorrosion, welche bei OER relevanten-Potentialen auftreten kann, zu einer signifikanten Destabilisierung des Katalysatormaterials. Entsprechend sind solche kohlenstoffhaltigen Katalysatorsysteme in einem bifunktionellen Sauerstoff-Elektrodensystem durch geringe Langzeitstabilitäten eingeschränkt.

Die Kombination eines auf die Katalyse der ORR spezialisierten Materials mit einem auf die Katalyse der OER spezialisierten Materials führt zu einem neuen Katalysatorsystem, welches idealerweise die vorteilhaften katalytischen Eigenschaften des jeweils spezialisierten Materials zeigt. Allerdings werden in der Regel auch die Nachteile der jeweiligen Materialien importiert. Dadurch ist es extrem schwierig zwei Materialien zu finden, welche eine der genannten Reaktionen aktiv katalysieren und unter den gänzlich anderen Bedingungen der Rückreaktion eine ausreichende Stabilität aufweisen.

J. Huang et al. (J. Catalysis 340 (2016), S. 261-269) beschreiben ein Katalysatormaterial für die photoelektrische Wasserspaltung (PEC) zur Wasserstofferzeugung. Das Katalysatormaterial enthält mit Mangan dotiertes α-Fe₂O₃, das mit NiFe-LDH beschichtet ist (Mn:α-Fe₂O₃/NiFe-LDH) und auf FTO geträgert vorliegt.

A. Flegler et al. (Electrochim. Acta 231 (2017), S. 216-222) beschreiben ein bifunktionelles Katalysatormaterial für Metall-Luft-Batterien, umfassend Partikel von γ-MnO₂, die mit NiFe-LDH beschichtet sind (γ-MnO₂/NiFe-LDH) und auf einem Glaskohlenstoff-Substrat vorliegen.

Der Erfindung liegt nun die Aufgabe zugrunde, die Probleme des Standes der Technik zu vermeiden. Insbesondere soll ein Katalysatormaterial für eine Elektrode in einer Brennstoffzelle, einem Elektrolyseur oder einer Metall-Luft-Batterie bereitgestellt werden, die sowohl eine sauerstoffumsetzende Reaktion, als auch eine sauerstofferzeugende Reaktion katalysiert. Darüber hinaus sollte die bereitgestellte Elektrode eine hohe Langzeitstabilität, insbesondere im Vergleich zu herkömmlichen Elektroden aufweisen.

Diese Aufgabe wird durch ein Katalysatormaterial für eine regenerative Brennstoffzelle oder einen reversiblen Elektrolyseur, eine Elektrode bzw. eine regenerative Brennstoffzelle mit einem solchen Katalysatormaterial sowie ein Verfahren zur Herstellung des Katalysatormaterials mit den Merkmalen der unabhängigen Ansprüche gelöst.

Somit betrifft ein erster Aspekt der Erfindung ein Katalysatormaterial für eine regenerative Brennstoffzelle oder für einen reversiblen Elektrolyseur, umfassend ein Mehrkomponentensystem aufweisend ein mit einem Dotanten M dotiertes Manganoxid; eine NiFe-Interkalationsverbindung; sowie ein leitfähiges kohlenstoffhaltiges Trägermaterial, auf dem das dotierte Manganoxid und die NiFe-Interkalationsverbindung mittelbar oder unmittelbar angeordnet (geträgert) sind.

Dabei wird unter einer unmittelbaren Anordnung eine Anordnung mit direktem Kontakt zwischen dem Trägermaterial und dem Manganoxid und/oder der NiFe-Interkalationsverbindung verstanden. Auf der anderen Seite bezeichnet eine mittelbare Anordnung eine Situation, in der das Manganoxid und/oder die NiFe-Interkalationsverbindung keinen direkten Kontakt zum Trägermaterial aufweist, sondern über eine dazwischenliegende Komponente getrennt sind. Insbesondere kann zwischen dem Trägermaterial und dem Manganoxid die NiFe-Interkalationsverbindung vorliegen oder Manganoxid zwischen dem Trägermaterial und der NiFe-Interkalationsverbindung. Typischerweise sind Mischungen all dieser Konstellationen zu erwarten. Bevorzugt ist, dass sowohl das Manganoxid als auch die NiFe-Interkalationsverbindung unmittelbar auf dem Trägermaterial vorliegen, d.h. mit direktem Kontakt zu diesem.

Die vorliegende Erfindung stellt ein bifunktionelles Katalysatormaterial zur Verfügung, das in der Lage ist, die Sauerstoffreduktionsreaktion (ORR) und die Sauerstoffentstehungsreaktion (OER) in modularen regenerativen Brennstoffzellen (URFC), reversiblen Elektrolyseuren oder Metallluftbatterien gleichermaßen zu katalysieren. Das Material umfasst im Gegensatz zu herkömmlichen Katalysatormaterialien für Brennstoffzellen und Elektrolyseuren zwei Elektrokatalysatoren, die jeweils selektiv eine der Sauerstoffreaktionen an einer Sauerstoffelektrode katalysieren. Mit anderen Worten sind durch die vorliegende Kombination beider Elektrokatalysatoren die Oxidation von Wasser und die Reduktion von Sauerstoff gleicharmaßen aktiv. Das zusätzliche Trägermaterial verbessert die Gesamtleitfähigkeit und steigert die Aktivität.

Das dotierte Manganoxid katalysiert selektiv die Reduktion von Sauerstoff (ORR), wohingegen die NiFe-Interkalationsverbindung selektiv die Sauerstoffentstehungsreaktion (OER) katalysiert. Überraschenderweise wird durch die Kombination der beiden spezialisierten Katalysatorbestandteile, die jeweilige Selektivität und Aktivität nicht signifikant beeinträchtigt.

Die bifunktionelle Aktivität des erfindungsgemäßen Katalysatormaterials ist bemerkenswert gut. Im Gegensatz zum üblichen Ansatz der Aktivitätsmaximierung durch Vergrößerung der Oberfläche (etwa durch Einsatz von Nanopartikeln) weist das erfindungsgemäße Katalysatormaterial bevorzugt vergleichsweise große Partikel und damit kleine Oberflächen auf. Das Manganoxid liegt vorzugsweise in Form rautenförmiger Partikel vor, welche bezogen auf ihre größte Erstreckung von Rautenspitze zu Rautenspitze eine Länge von 50 bis 300 nm, insbesondere von 70 bis 150 nm aufweisen. Beispielsweise weisen die rautenförmige Partikel eine durchschnittliche Partikelgröße von 100 × 15 ×15 nm auf. Die NiFe-Interkalationsverbindung liegt bevorzugt in Form kleiner dünner Plättchen mit einem Durchmesser im Bereich von 10 bis 500 nm, insbesondere von 20 bis 250 nm, vor. Übliche Edelmetall basierte Katalysatoren des Standes der Technik weisen einen Durchmesser von 1 bis 5 nm auf. Somit weisen beide Materialien der Erfindung vergleichsweise große Abmessungen auf. Außerdem haben NiFe-Interkalationsverbindungen die Tendenz, die aktive Oberfläche durch Abdeckung der reaktiven Grenzfläche des Katalysators zu verkleinern. Daher sind die gleichzeitig hohen ORR- und OER-Aktivitäten überraschend. Die Stabilität des erfindungsgemäßen Katalysatormaterials ist ebenso erstaunlich, da eine Kohlenstoffkomponente enthalten ist. Aufgrund der erwähnten Kohlenstoffkorrosion führt das in den meisten Fällen zu einer drastischen Verschlechterung der Aktivität über längere Zeiträume, während sie in dem erfindungsgemäßen System erhalten bleibt.

Demnach zeigte sich, dass das erfindungsgemäße Katalysatormaterial eine überraschend geringe Degradation durch Katalysatorkorrosion, insbesondere eine geringe Neigung zur Kohlenstoffkorrosion im Trägermaterial aufweist. Dies führt zu einer deutlich höheren Langzeitstabilität des Katalysatormaterials verglichen zu bekannten Systemen.

Erfindungsgemäß wird als dotiertes Übergangsmetalloxid ein mit einem Dotanten M dotiertes Manganoxid verwendet. Manganoxid ist als Basismaterial besonders kostengünstig und zeigt insbesondere als α-Manganoxid, beispielsweise im Cryptonmelan-Typ, bemerkenswerte ORR-Aktivitäten. Somit ist es besonders bevorzugt, dass das Manganoxid der Formel M:α-MnO₂ entspricht.

Der Dotant M ist vorzugsweise ausgewählt aus der Gruppe umfassend Eisen, Nickel, Kupfer, Silber und/oder Kobalt. Diese Gruppe der Dotanten erwies sich als besonders geeignet, um die Aktivität des Katalysatormaterials bei Sauerstoffreduktionsreaktionen zu erhöhen.

In weiterer bevorzugter Ausgestaltung der Erfindung ist vorgesehen, dass der Dotant zu einem Gewichtsanteil zwischen 0,1 bis 3,5 Gew.-%, insbesondere zwischen 0,2 bis 3,35 Gew.-%, vorzugsweise von 0,3 bis 2,5 Gew.-%, besonders bevorzugt 0,5 bis 1,5 Gew.-%, bezogen auf das undotierte Manganoxid, enthalten ist. Eine Dotierung des Manganoxids in diesen Bereichen zeigte sich insbesondere bei der oben genannten Gruppe möglicher Dotanten als vorteilhaft in Bezug auf die Aktivität und die Stabilität des dotierten Manganoxids bei gleichzeitiger Maximierung der selektiven Katalyse der Sauerstoffreduktionsreaktion.

Mit besonderem Vorteil liegt die NiFe-Interkalationsverbindung als so genannte Layered Double Hydroxide (LDH) vor. NiFe-LDH zeigt eine hohe Aktivität bei der Katalyse der Sauerstoffentwicklungsreaktion und zeichnet sich darüber hinaus durch seine hohe Selektivität und Stabilität aus.

LDH sind eine Klasse ionischer Feststoffe, die sich durch eine Schichtstruktur mit der generischen Abfolge [AcBZAcB]ₙ auszeichnet. Dabei definiert c Schichten von Metallkationen, wobei A und B Schichten von Hydroxid (OH-Gruppen oder O⁻-Anionen) und Z Schichten anderer Anionen oder neutraler Moleküle (wie beispielsweise Wasser) darstellen. Seitliche Versatze zwischen den Lagen können zu längeren Wiederholungsperioden führen. Die interkalierten Anionen (Z) sind schwach gebunden und oft austauschbar. Vorliegend sind Eisen und Nickel divalente und trivalente Kationen, die als eine positive Schicht c zwischen anionischen oder neutralen Hydroxidschichten A, B angeordnet sind. Hierbei handelt es sich um eine Interkalationsverbindung des Hydrotalcit-Typs. Besonders bevorzugt liegen Nickel und Eisen im molaren Verhältnis von 1,5 : 1 bis 5 : 1, insbesondere von 3 : 1 bis 5 : 1, in der NiFe-Interkalationsverbindung vor (bezogen auf das NiFe-LDH vor einem etwaigen Anionenaustausch). Die angegebenen Anteile beziehen sich auf molare Anteile gemessen über ICP-OES. Da allerdings die molaren Massen sehr ähnlich sind, sind die Unterschiede zu den Gewichtsanteilen gering.

Die NiFe-Interkalationsverbindung, insbesondere in Form von NiFe-LDH, ist in speziellen Ausführung der Erfindung durch Anionenaustausch modifiziert. Insbesondere können Hydroxidionen oder Carbonationen der Schichten A, B gegen Perchlorationen oder Chloridionen ausgetauscht werden._Die Einführung anderer Anionen ist jedoch ebenso denkbar. Abhängig vom Radius der eingelagerten Anionen lässt sich auf diese Weise der Schichtabstand (interlayer distance) beeinflussen. Die aus der Modifikation resultierende NiFe-Interkalationsverbindung weist höhere elektrokatalytische Aktivitäten hinsichtlich OER auf als das unmodifizierte Material. Ein geeignetes Verfahren zur Herstellung einer Chlorid- oder Perchlorat-modifizierten NiFe-Interkalationsverbindung ist in Song et al. beschrieben (Song, F., et al., Exfoliation of layered double hydroxides for enhanced oxygen evolution catalysis. Nature Communications 2014, 5 (1)). Hierbei handelt es sich um einen zweistufigen Anionenaustausch der in der Zwischenschicht A, B der NiFe-Interkalationsverbindung befindlichen Anionen. Als Ausgangsmaterial für die Modifikation wird beispielsweise eine aus der Mikrowellen-assistierten Synthese erhaltene NiFe-Interkalationsverbindung verwendet. Der Anionenaustausch umfasst dabei zwei Schritte. Im ersten Schritt werden die in der Zwischenschicht A, B vorliegenden Anionen, bei denen es sich hauptsächlich um Carbonat- oder Hydroxidionen handelt, gegen Chloridionen ausgetauscht. Im zweiten Schritt erfolgt der Austausch der Chloridionen gegen Perchlorationen.

Gemäß einer Ausführung ist die NiFe-Interkalationsverbindung direkt auf das Trägermaterial aufgewachsen. Hierdurch lässt sich eine Erhöhung der elektrokatalytischen Aktivität der NiFe-Interkalationsverbindung hinsichtlich der OER erzielen. Beispielsweise kann ein solches System mittels einer Mikrowellen-assistierten Synthesemethode hergestellt werden, wobei das gewünschte Trägermaterial vor dem Mikrowellenverfahren in die Reaktionslösung hinzugegeben und dispergiert wird. Ein geeignetes Herstellungsprotokoll ist in Dresp et al. beschrieben (S. Dresp, F. Luo, R. Schmack, S. Kühl, M. Gliech and P. Strasser, Energy Environ. Sc., 2016, 9, 2020-2024).

In weiterer bevorzugter Ausgestaltung der Erfindung ist vorgesehen, dass das leitende Trägermaterial ausgewählt ist aus partikulärem Kohlenstoff, so genanntem *Carbon Black,* Graphen, nanostrukturiertem Kohlenstoff, beispielsweise Kohlenstoffnanoröhren (*carbon nanotubes,* CNT), mehrwandige Kohlenstoffnanoröhren (*multi-walled carbon nanotubes,* MWCNT), Kohlenstoffnanohörner (*carbon nanohorns*) oder Kohlenstoffnanofasern, karbonisiertem Trägermaterial oder dergleichen sowie Mischungen aus diesen. Diese Materialien zeigen hohe elektrische Leitfähigkeiten und justierbare Oberflächengrößen und sind daher als Trägermaterial für das Übergangsmetalloxid und/oder die Interkalationsverbindung besonders geeignet. In dem erfindungsgemäßen Katalysatormaterial dient das Trägermaterial insbesondere als Substrat für das Manganoxid, welches sich demgemäß auf der Oberfläche des Trägermaterials anlagert. Damit werden die Nachteile der meisten Übergangsmetalloxide, insbesondere der Cryptomelane, die sich in kleinen Dimensionen und damit verbunden niedriger Oberfläche zeigen, überwunden. Zudem wird eine Aggregation der katalytisch aktiven Substanz, ebenso wie ein Austrag dieser aus dem System, verhindert.

In bevorzugten Ausführungsbeispielen ist das leifähige Trägermaterial, insbesondere in Form der vorgenannten Beispiele, durch Fremdatome modifiziert, wobei einzelne Kohlenstoffatome des Gitters durch Fremdatome ersetzt sind. Bevorzugte Fremdatome umfassen Sauerstoff, Stickstoff, Phosphor und Kombinationen von diesen. Die modifizierten kohlenstoffhaltigen Trägermaterialien weisen eine bessere elektrokatalytische Aktivität hinsichtlich OER und ORR auf sowie eine bessere Stabilität in dem relevanten Potentialbereich von 0.6 V bis 1.9 V, gemessen gegen eine reversible Wasserstoffelektrode (engl. *Reversible Hydrogen Electrode;* RHE). Geeignete modifizierte Kohlenstoffmaterialien und ihre Herstellung sind bekannt (Inagaki, M., et al., Nitrogen-doped carbon materials. Carbon 2018, 132, 104-140; Khazaee, M., et al., Dispersibility of vapor phase oxygen and nitrogen functionalized multi-walled carbon nanotubes in various organic solvents. Sci Rep 2016, 6, 26208; Wepasnick, K. A., et al., Surface and structural characterization of multi-walled carbon nanotubes following different oxidative treatments. Carbon 2011, 49 (1), 24-36; Zhao, A., et al., Activation and Stabilization of Nitrogen-Doped Carbon Nanotubes as Electrocatalysts in the Oxygen Reduction Reaction at Strongly Alkaline Conditions. The Journal of Physical Chemistry C 2013, 117 (46), 24283-24291; Vikkisk, M., et al., Electrocatalytic oxygen reduction on nitrogen-doped graphene in alkaline media. Applied Catalysis B: Environmental 2014, 147, 369-376). Häufig erfolgt zunächst eine Modifizierung mit Sauerstoff, um dann das erhaltene Sauerstoff-modifizierte kohlenstoffhaltige Trägermaterial (OC) nachfolgend durch Stickstoff und/oder Phosphor zu modifizieren.

Mit besonderem Vorteil liegt ein Gewichtsverhältnis zwischen Manganoxid, NiFe-Interkalationsverbindung und Trägermaterial im Bereich von 1:1:1 bis 3:3:1. In diesem Bereich konnte die oben bereits beschriebene vergleichsweise geringe aktive Oberfläche, insbesondere eine geringe freie Oberfläche des Trägermaterials, im erfindungsgemäßen Katalysatormaterial mit den sich daraus ergebenden unerwarteten Vorteilen bezüglich Langzeitstabilität des Katalysatormaterials bei Verwendung in einer Elektrode besonders gut generiert werden.

Ein weiterer Aspekt der Erfindung betrifft eine Elektrode, insbesondere eine Sauerstoffelektrode für eine Brennstoffzelle, die das erfindungsgemäße Katalysatormaterial aufweist. Ferner betrifft die Erfindung eine Brennstoffzelle aufweisend eine lonenaustauschmembran, die zumindest einseitig mit dem erfindungsgemäßen Katalysatormaterial beschichtet ist.

Darüber hinaus betrifft die Erfindung ein Verfahren zum Herstellen des erfindungsgemäßen Katalysatormaterials. Das erfindungsgemäße Verfahren umfasst das Bereiten einer Mischung aus dem dotierten Manganoxid, der NiFe-Interkalationsverbindung sowie dem leitfähigen Trägermaterial durch physikalische Vermengung der Ausgangsmaterialien in Pulver- oder partikulärer Form, wobei die Partikel bevorzugt Nanopartikel sind, also mittlere Partikelgrößen im Bereich von 1 bis 100 nm aufweisen. Zum Bereiten einer Katalysatortinte, in Form einer Katalysatordispersion, wird die Mischung unter Zugabe von (insbesondere hochreinem) Wasser, einem organischen Lösungsmittel (vorzugsweise *iso*-Propanol) sowie optional einem Bindemittel suspendiert. Die Suspension wird vorzugsweise durch Ultraschallanwendungen unterstützt. Das hochreine Wasser hat einen Wiederstand von mindestens 17 MΩ, vorzugsweise 18,2 MΩ oder mehr.

Anschließend wird die erhaltene Katalysatortinte durch übliche Verfahren auf einem Substrat aufgetragen. Nachdem die Lösungsmittel abgedampft sind, verbleibt das erfindungsgemäße Katalysatormaterial mit Binder auf dem Substrat.

Als Bindemittel wird bevorzugt ein perfluoriertes Sulfonsäurepolymer, insbesondere Nafion^{®}, eingesetzt. Im Vergleich zu anderen Bindemitteln haben diese den Vorteil, dass es ionische Eigenschaften aufweisen und somit die Leitfähigkeit des Katalysatormaterials nicht herabsetzen. Darüber hinaus zeichnen sich perfluorierte Sulfonsäurepolymere durch hohe Betriebstemperaturen im Vergleich zu anderen Polymeren aus.

Das organische Lösungsmittel ist insbesondere ein niederer Alkohol 1 bis 6 Kohlenstoffatomen, vorzugsweise *iso*-Propanol.

In einer Ausführungsvariante wird die NiFe-Interkalationsverbindung bereits während der Synthese auf das kohlenstoffhaltige Trägermaterial aufgebracht, insbesondere durch direktes Aufwachsen auf dem Trägermaterial (s.o.). In diesem Fall umfasst der erste Schritt des Verfahrens das Bereiten einer Mischung aus dem dotierten Manganoxid und der auf dem Trägermaterial vorliegenden NiFe-Interkalationsverbindung.

Im Falle langsamer Verfahren der Auftragung der Katalysatortinte auf ein Substrat sind folgenden Verhältnisse bevorzugt. Mit besonderem Vorteil ist Wasser zu 70-80 Gew.-%, das organische Lösungsmittel (insbesondere *iso*-Propanol) zu 15-35 Gew.-% und das Bindemittel zu 0-5 Gew.-% insbesondere von 2-5 Gew.-% bezogen auf die Summe der Komponenten Wasser, organisches Lösungsmittel und Bindemittel in der Suspension enthalten. Besonders bevorzugt liegen sie in einem Verhältnis von 76,8 : 20 : 3,2 Gew.-% vor. Die Lösungsmittelverhältnisse sowie Verhältnisse zwischen Katalysator und Bindemittel können auf ein schnelleres Beschichtungsverfahren wie folgt angepasst werden. Mit besonderem Vorteil liegt Wasser mit 0,5-5 Gew.-% und das organische Lösungsmittel mit 95-99,5 Gew.-%, bezogen auf die Summe der Komponenten Wasser und organisches Lösungsmittel vor. Katalysator und Bindemittel werden vorzugsweise in einem Verhältnis zwischen 5:3 und 7:3 zu dem genannten Lösungsmittelgemisch hinzugefügt. Innerhalb der oben angegebenen Anteilsbereiche zeigen die bereitgestellten Katalysatortinten eine besonders gleichmäßige Verteilung und gute Suspensionsfähigkeit der Partikel (Übergangsmetalloxid, Interkalationsverbindung, Trägermaterial), sowie einen optimalen Kompromiss aus zügigem und schonendem Abdampfen der Lösungsmittel. Das vorliegende Verhältnis zwischen organischer Komponenten und Wasser zeigte eine hohe physikalische Stabilität und Haftung des Katalysatormaterials bzw. der Katalysatorschicht.

Das mit dem erfindungsgemäßen Katalysatormaterial beschichtete Substrat findet vorzugsweise als Elektrode, insbesondere als Sauerstoffelektrode, in einer Brennstoffzelle, einem Elektrolyseur einer Batterie oder einer regenerativen Brennstoffzelle bzw. reversiblen Elektrolyseur Verwendung.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: (a) XRD-Diffraktogramme von mit Kobalt, Nickel, Kupfer oder Silber dotiertem alpha-Mangan(IV)oxid sowie von nicht dotiertem alpha-Mangan(IV)oxid, (b) XRD-Diffraktogramme eines Kohlenstoffträgermaterials, von NiFe-LDH, von Cu:α-MnO₂ sowie eines erfindungsgemäßen Katalysatormaterials, umfassend sämtliche dieser Komponenten;
- Figur 2: graphische Gegenüberstellung elektrochemischer RDE-Messungen von mit Kobalt, Nickel, Kupfer oder Silber dotiertem alpha-Mangan(IV)oxid;
- Figur 3: graphische Darstellung zyklischer Voltammogramme eines erfindungsgemäßen Katalysatormaterials Cu:α-MnO₂/Carbon/NiFe-LDH im Vergleich mit den Einzelkomponenten Cu:α-MnO₂/Carbon und NiFe-LDH, sowie einem edelmetallbasierten Referenzkatalysator Pt/C-Ir/C, a) ORR-Aktivität, b) OER-Aktivität;
- Figur 4: graphische Darstellung zyklischer Voltammogramme der Materialien aus Figur 3 nach elektrochemischer Belastung, a) ORR-Aktivität, b) OER-Aktivität;
- Figur 5: graphische Darstellung eines galvanostatischen Stabilitätstests von Cu:α-MnO₂/Carbon/NiFe-LDH an einer rotierenden Scheibenelektrode;
- Figur 6: schematische Schnittansicht einer modular regenerativen Brennstoffzelle (URFC) in einer bevorzugten Ausgestaltung der Erfindung;
- Figur 7: a) ORR- und b) OER-Aktivitäten eines erfindungsgemäßen modifizierten Katalysatormaterials Cu:α-MnO₂/mod.Carbon/NiFe-LDH-(Cl⁻/ClO₄⁻) im Vergleich zu dem nichtmodifizierten Material Cu:α-MnO₂/carbon/NiFe-LDH;
- Figur 8: Vergleich der ORR- und OER-Aktivitäten sowie der Gesamtaktivität des modifizierten Katalysatormaterials Cu:α-MnO₂/mod.Carbon/NiFe-LDH-(Ci⁻/ClO₄⁻) und des nichtmodifizierten Materials Cu:α-MnO₂/carbon/NiFe-LDH Im vergleich zu OER/OPR-Katalysatoren des Standes der Technik; und
- Figur 9: Langzeitstabilität des a) modifizierten Katalysatormaterials Cu:α-MnO₂/mod.Carbon/NiFe-LDH-(Cl⁻/ClO₄⁻) b) im Vergleich zu dem nichtmodifizierten Material Cu:α-MnO₂/carbon/NiFe-LDH.

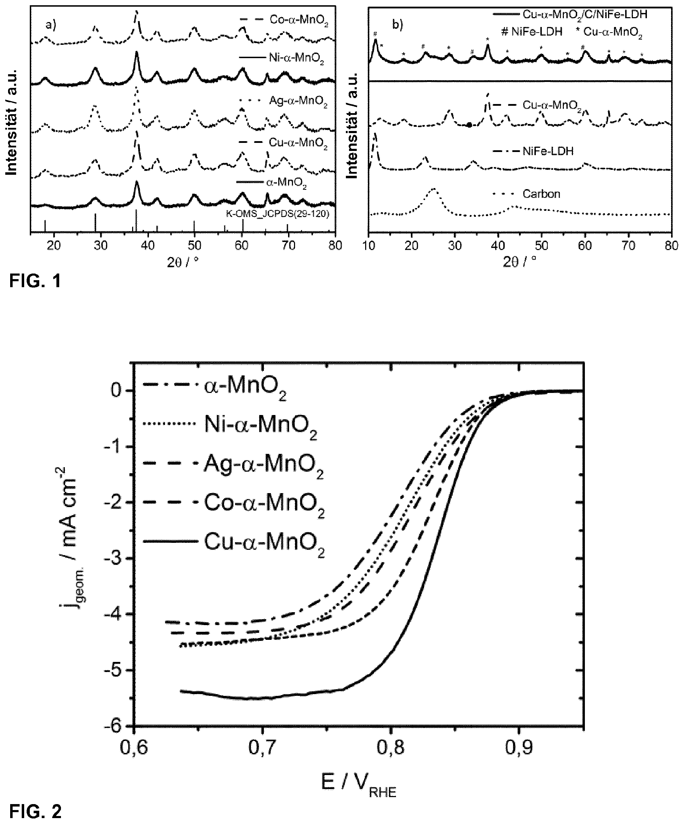

Figur 1 zeigt a) XRD-Diffraktogramme von undotiertem Kryptomelan-Manganoxid (α-MnO₂) und von dotiertem Manganoxid vom Kryptomelan-Typ (M:α-MnO₂, M = Cu, Ni, Ag, Co). Die Kristallstruktur des resultierenden Manganoxids wird durch die Metalldotierungen nicht beeinflusst. Dies lässt den Schluss zu, dass die Menge der Dotierstoffe durch die eingesetzte Synthese drastisch erhöht werden kann. In Teil b) der Figur 1 sind XRD-Diffraktogramme der einzelnen Komponenten des Drei-Komponenten-Systems sowie eines vollständigen erfindungsgemäßen Drei-Komponenten-Systems dargestellt.

Ergebnisse elektrochemischer RDE-Messungen in Sauerstoff-gesättigter 0,1 M KOH bei 5 mV s⁻¹, 1600 U/min und einer Katalysatorbeladung von 203,72 µg cm⁻² sind in Figur 2 gezeigt. Die Figur zeigt die ORR-Aktivitäten verschiedener dotierter Manganoxide des Kryptomelan-Typs (M:α-MnO₂, M = Cu, Ni, Ag, Co). Wie in Figur 2 dargestellt, hat Cu:α-MnO₂ das positivste Potential bei -3 mA cm⁻² und die höchsten Diffusionsgrenzströme. Daher kann Cu:α-MnO₂ unter den hier untersuchten Materialien als das aktivste Material angesehen werden und wird für die weiterführenden Messung des erfindungsgemäßen Katalysators zugrunde gelegt.

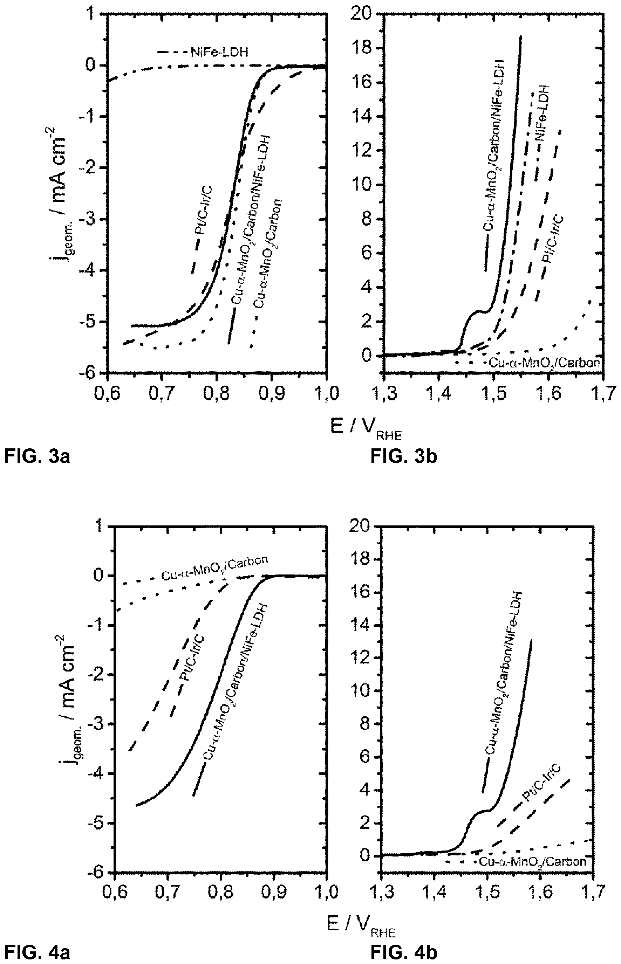

In Figur 3 sind zwei Diagramme gezeigt, welche a) ORR- und b) OER-Aktivitäten von NiFe-LDH, Pt/C-Ir/C, Cu:α-MnO₂/Carbon und physikalisch gemischtem Cu:α-MnO₂/Carbon/NiFeLDH zeigen. Den Graphen ist zu entnehmen, dass das erfindungsgemäße Übergangsmetalloxidbasierte System den als Referenz verwendeten kommerziellen Katalysator in Bezug auf ORRsowie OER-Aktivität übertrifft. Die ORR-Aktivität des Manganoxids wird durch die Zugabe von NiFe-LDH nur geringfügig beeinflusst, während die OER-Aktivität drastisch gesteigert wird.

Figur 4 zeigt a) ORR und b) OER-Aktivitäten von Cu:α-MnO₂/Carbon, kommerziellem Pt/C-Ir/C und Cu:α-MnO₂/Carbon/NiFe-LDH nach elektrochemischer Belastung. Die Stabilität des Übergangsmetallkatalysators übertrifft die Stabilität des kommerziellen Edelmetall-Referenzkatalysators. Zudem zeigt sich in einem einfachem Vergleich, dass NiFe-LDH die Stabilität des erfindungsgemäßen Drei-Komponenten-Katalysators erheblich verbessert. Während die Aktivität von NiFe-LDH-freiem Cu:α-MnO₂/Carbon drastisch abnimmt, ist die Aktivität des NiFe-LDH-haltigem Systems weniger stark beeinflusst. Daher wird von einer abschirmenden Wirkung von NiFe-LDH ausgegangen.

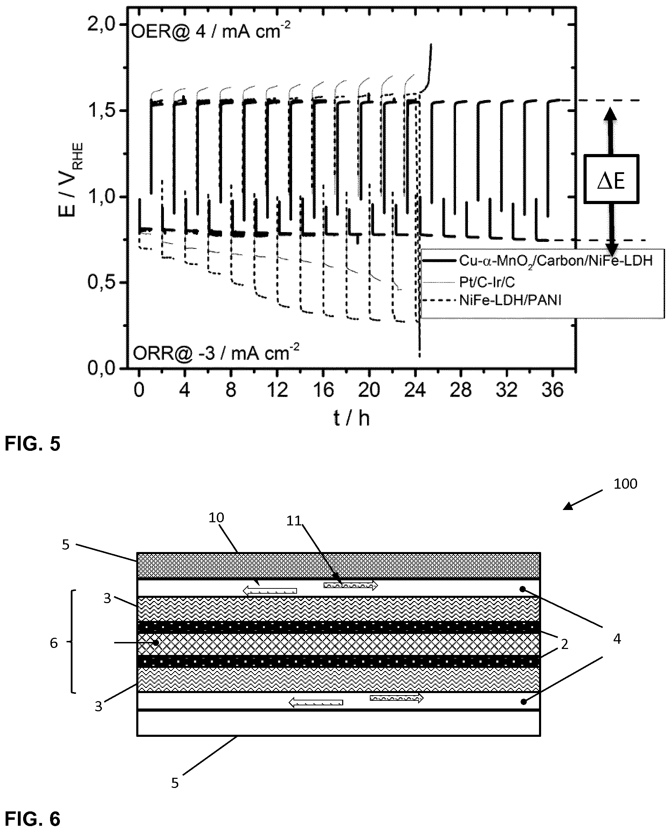

Figur 5 zeigt eine graphische Darstellung galvanostatischer Stabilitätsmessungen an einer rotierenden Scheibenelektrode in einer sauerstoffgesättigten 0,1 M KOH Lösung des vorgestellten Cu:α-MnO₂/Carbon/NiFe-LDH, eines kommerziellen Referenzkatalysators und eines Übergangsmetall-basierten Vergleichssystems (Daten von NiFe-LDH/PANI aus Referenz). Der Strom wurde für die Sauerstoffreduktions-Reaktion konstant bei -3 mA cm⁻² und für die Sauerstoff-Evolutionsreaktion konstant bei 4 mA cm⁻² gehalten. Im Gegensatz zum Übergangsmetall-basierten Vergleichssystem und dem auf Edelmetall basierendem Referenzkatalysator bleibt die Gesamtaktivität über mehr als 18 alternierenden OER- und ORR-Potentialzyklen stabil erhalten.

Eine schematische Schnittansicht einer Einzelzelle einer insgesamt mit 100 bezeichneten PEM-Brennstoffzelle ist in Figur 6 zur Erläuterung des Aufbaus und ihrer Wirkungsweise dargestellt.

Die Brennstoffzelle 100 umfasst als Kernkomponente eine Membran-Elektroden-Einheit 6, welche vorliegend bevorzugt eine lonenaustauschmembran 1 aufweist sowie jeweils eine, an eine der beiden Flachseiten der Membran 1 anschließende Elektrode 2, nämlich eine Anode sowie eine Kathode. Bei der lonenaustauschmembran 1 kann es sich um eine Polymerelektrolytmembran, bevorzugt eine Anionenaustauschmembran, beispielsweise Tokuyama A201, Selemion, Fumasep handeln, welche (selektiv) eine lonendiffusion vom Anodenraum in den Kathodenraum oder umgekehrt zulässt. Die Elektroden 2 umfassen ein katalytisches Material, das auf einem elektrisch leitfähigen Material, beispielsweise einem kohlenstoffbasierten Material, geträgert vorliegen kann.

An die Elektroden 2 schließt jeweils eine Gasdiffusionsschicht 3 an, der im Wesentlichen die Aufgabe einer gleichmäßigen Verteilung der zugeführten Betriebsgase über die Hauptflächen der Elektroden 2, beziehungsweise der Membran 1, zukommt.

An den Außenseiten jeder Gasdiffusionsschicht 3 ist eine Bipolarplatte 5 angeordnet. Bipolarplatten haben die Aufgabe, die einzelnen Membran-Elektroden-Einheiten 6 der Einzelzellen im Stapel elektrisch miteinander zu verschalten, den Brennstoffzellenstapel zu kühlen sowie die Betriebsgase den Elektroden 2 zuzuführen. Zu letzterem Zweck weisen die Bipolarplatten 5 (auch Flussfeldplatten genannt) Flussfelder 4 auf. Die Flussfelder 4 umfassen beispielsweise eine Vielzahl parallel zueinander angeordneter Strömungskanäle, die in Form von Rinnen oder Nuten in die Platten 5 eingearbeitet sind. Üblicherweise weist jede Bipolarplatte auf ihrer einen Seite ein Anodenflussfeld auf, das der Anode 2 zugewandt ist, und auf ihrer anderen Seite ein der Kathode zugewandtes Kathodenflussfeld. Vorliegend ist für jede der zwei dargestellten Bipolarplatten 5 jeweils nur ein Flussfeld 4 abgebildet.

Im Betrieb als Brennstoffzelle wird dem Anodenflussfeld ein Brennstoff, insbesondere Wasserstoff (H₂) zugeführt, während dem Kathodenflussfeld ein Sauerstoff (O₂) enthaltenes Betriebsmittel, insbesondere Luft zugeführt wird.

Im Betrieb als reversible Brennstoffzelle ändert sich die Funktion der Flussfelder, das Anodenfeld wird zum Kathodenfeld und umgekehrt. Daher ist es zweckmäßiger, die Elektroden als Sauerstoffelektrode und Wasserstoffelektrode zu bezeichnen. Dabei finden an der Sauerstoffelektrode die Reaktionen unter Beteiligung von Sauerstoff, also die Sauerstoffreduktions- und die Sauerstofferzeugungsreaktion statt. An der Wasserstoffelektrode hingegen finden die Wasserstofferzeugungs- und Wasserstoffoxidationsreaktion statt.

Da die an der Wasserstoffelektrode stattfindenden Reaktionen weniger komplex und leichter zu katalysieren sind, ist das erfindungsgemäße Katalysatormaterial bevorzugt auf der Sauerstoffelektrode angeordnet.

Die an den Elektroden stattfindenden Reaktionen sind in Figur 1 nicht dargestellt. Die an der Oberfläche der jeweiligen Elektrode katalysierten Elektroden setzen Ionen frei, welche dann durch die Membran 1 migrieren. Im Falle einer Brennstoffzellenreaktion bedeutet das, dass an der Sauerstoffelektrode eine katalytische Reduktion von Sauerstoff O₂ in Hydroxidionen OH⁻unter Aufnahme von Elektronen stattfindet. Die Hydroxidionen migrieren durch die Anionen leitende Membran 1 und erreichen die Wasserstoffelektrode. Dort reagiert der zugeführte Wasserstoff H₂ mit den Hydroxidionen OH⁻ zu Wasser H₂O, wobei der Wasserstoff oxidiert wird und somit Elektronen abgibt. Die Elektronen der Wasserstoffelektrodenreaktion werden über einen äußeren, hier nicht dargestellten Stromkreis den Sauerstoffelektroden zugeführt. Aus Figur 1 ist ersichtlich, dass das Produktwasser der Brennstoffzelle 100 auf der Sauerstoffelektrodenseite der Membran 5 anfällt.

Das katalytisch beschichtete Substrat, welches als Elektrode wirkt, umfasst ein Substrat sowie eine darauf aufgebrachte Katalysatorschicht gemäß der vorliegenden Erfindung. Die Katalysatorschicht kann als Sauerstoffelektrode in einer Brennstoffzelle fungieren. Das Substrat kann eine Membran oder eine Gasdiffusionsschicht sein. In der hier dargestellten Ausführungsform handelt es sich bei dem Substrat um eine Membran. Bei der Membran kann es sich prinzipiell um eine beliebige, in der Brennstoffzellentechnik verwendete lonenaustauschermembran handeln. Hierzu zählen etwa Polymerelektrolytmembrane, deren elektrolytische Leitfähigkeit auf ihrer Befeuchtung mit Wasser beruht (z. B. Nafion^{®}), oder solche, die ihre Leitfähigkeit einer an das Polymermaterial gebundenen Säure oder im Falle von Anionenaustauschmembran von dessen quaternärem Amin verdanken, beispielsweise mit Trimethylammonium dotiertem Polysulfon, sodass quaternäre Benzyltrimethylammonium Gruppen entstehen.

Die Katalysatorschicht setzt sich zumindest aus einem Katalysatormaterial zusammen, welches auf einem Trägermaterial angeordnet ist. Ferner kann sie ein Lösungsmittel, einen Elektrolyten und/oder einen Elektronenleiter umfassen.

Das Trägermaterial fungiert als Elektronenleiter. Im Allgemeinen handelt es sich bei dem Elektronenleiter um elektrisch leitfähige Kohlenstoffpartikel. Als elektrisch leitfähige Kohlenstoffpartikel können alle auf dem Gebiet der Brennstoff- beziehungsweise Elektrolysezellen bekannten Kohlenstoffmaterialien mit hoher elektrischer Leitfähigkeit und großer Oberfläche eingesetzt werden. Die Oberfläche beträgt beispielsweise 50 bis 200 m²/g. Bevorzugt werden Ruße, Graphit oder Aktivkohlen verwendet. Ganz besonders bevorzugt sind Ruße mit hoher Leitfähigkeit, sogenannte Leitfähigkeitsruße. Darüber hinaus kann Kohlenstoff auch in anderen Modifikationen, beispielsweise in granularer Form oder als sogenannte Nanotubes eingesetzt werden.

Die bevorzugte Ausführungsform des erfindungsgemäßen Katalysatormaterials stellt ein neuartiges Katalysatorsystem zur Verfügung, das als bifunktionelle Sauerstoffelektrode in Unitized Regenerative Fuel Cells (URFC) und Metallluftbatterien eingesetzt werden kann. Das Katalysatorsystem umfasst ein physikalisches Gemisch aus getrennt synthetisiertem NiFe-Schicht-Doppelhydroxid (NiFe-LDH), M-dotiertem alpha-MnO₂ (M:α-MnO₂) und zusätzlichem Kohlenstoffträger.

Insbesondere M:α-MnO₂ (M = Nickel, Kupfer, Silber oder Kobalt) ist die für ORR katalytisch wirkende Komponente. Der Anteil (Gewichtsbasis) des Dotierstoffes in M:α-MnO₂ liegt bevorzugt bei 0,2 Gew.-%, bis zu 2,2 Gew. %. α-MnO₂ kristallisiert in der Kryptomelanstruktur, die von den Dotierstoffen nicht beeinflusst wird, wie Figur 1 zeigt. Als Trägermaterial wird bevorzugt handelsüblicher "Carbon Black", beispielsweise Vulcan XC-72R^{®} verwendet.

Die für die Oxidation von Wasser aktive Komponente ist eine Interkallationsverbindung, bevorzugt NiFe-LDH. Das molare Verhältnis zwischen Nickel und Eisen liegt dabei zwischen 5 : 1 bis 3 : 1. Um den Elektrokatalysator zu erhalten, der in der Lage ist, die genannten Reaktionen zu katalysieren, werden die verschiedenen Komponenten physikalisch durch Ultraschall vermischt. Dazu wird eine Suspension hergestellt, die beide Elektrokatalysatoren, das Trägermaterial, hochreines Wasser (beispielsweise mittels Mili-Q erhalten), *iso*-Propanol und das Bindemittel enthält. Das Verhältnis (Gewichtsbasis) zwischen Mili-Q, *iso*-Propanol und Bindemittel beträgt im Falle einer langsamen Auftragung auf ein Substrat bevorzugt 76,8 Gew.%: 20,0 Gew.-%: 3,2 Gew.-%. Die Gesamtkonzentration der Feststoffe kann hier im Bereich von 3,5 mg L⁻¹ bis 5 mg L⁻¹ liegen. Im Falle einer schnellen Auftragung liegen Wasser und *iso-*Propanol bevorzugt mit 2 Gew.-% und 98 Gew.-% vor. Feststoff und Bindemittel liegen dann bevorzugt in einem Verhältnis von 7 : 3 in dem Lösungsmittelgemisch vor. Die Gesamtmasse des Feststoffs kann hier in einem Bereich von 15000 mg L⁻¹ bis 22000 mg L⁻¹ liegen. Das verwendete Bindemittel ist ein perfluoriertes Sulfonsäurepolymer wie Nafion^{®} oder Polysulfon, welches quaternäre Benzyltrimethylammonium-Gruppen enthält.

α-MnO₂ allein ist kein ausreichend aktiver und stabiler Katalysator für die ORR. Das Aufbringen von α-MnO₂ auf Kohlenstoff, insbesondere Vulcan XC-72R und die Dotierung von α-MnO₂ , insbesondere mit Kupfer liefert ein Material, das ein konkurrenzfähiger ORR-Katalysator ist. NiFe-LDH ist ein sehr aktiver und stabiler OER-Katalysator. Andere Materialien auf der Basis von Übergangsmetallen, die in der Lage sind, OER mit der gleichen Aktivität wie NiFe-LDH zu katalysieren, sind Nickel- oder Vanadium-dotierte Cobaltferrite (Coₓ(Ni/V)₃Fe₂O₄). Der vorliegende Elektrokatalysator bietet gegenüber anderen bifunktionellen Systemen mehrere Vorteile. Es ist ein sehr kosteneffizientes System, verglichen mit Elektrokatalysatoren auf der Basis von Edelmetallen wie Pt/C-Ir/C, die ähnliche OER- und ORR-Aktivitäten erzielen. Im Vergleich zu anderen ORR-Katalysatoren auf der Basis von Übergangsmetallen und Kohlenstoffmaterialien ist die Synthese der ORR-aktiven Komponente einfach, schnell, energieeffizient und leicht skalierbar. Der größte Vorteil des hier vorgestellten Dreikomponenten-Systems ist die außerordentliche Stabilität. Während die Aktivität von Systemen wie NiFe-LDH/PANI oder Pt/C-Ir/C während andauernder elektrochemischer Belastung signifikant abnimmt, bleibt die Aktivität des erfindungsgemäßen Katalysatormaterials trotz der Kohlenstoffkomponente intakt (Figur 4).

Die Mischung aus M:α-MnO₂, NiFe-LDH und Trägermaterial in der bevorzugten Zusammensetzung liefert einen kostengünstigen und wettbewerbsfähigen Elektrokatalysator, der gleichzeitig für OER und ORR aktiv ist. Während die elektrochemische Spaltung von Wasser durch NiFe-LDH katalysiert wird, wird die Sauerstoffreduktion durch das kohlenstoffgeträgerte M:α-MnO₂ katalysiert. Dabei sind die genannten Komponenten jeweils nur für OER oder ORR aktiv, nicht aber für beide Reaktionen.

Im folgenden sind Beispiele zur Darstellung des erfindungsgemäßen Katalysatormaterials angegeben.

### Beispiel 1: Herstellung von M:α-MnO₂; M = Co, Cu, Ag, Ni, CoCu

α-MnO₂ wurde nach einem Top-Down-Ansatz synthetisiert, der von Ding et. al. (Y. Ding, X. Shen, S. Gomez, R. Kumar, V. M. B. Crisostomo, S. L. Suib and M. Aindow, Chem. Mater., 2005, 17, 5382-5389) beschrieben wurde. Zur Bestimmung des optimalen Dotierstoffs für α-MnO₂ wurden kleine Mengen Kobalt, Kupfer, Silber, Nickel und ein Gemisch aus Kobalt und Kupfer der genannten Synthese zugesetzt und anschließend hinsichtlich der ORR-Aktivität getestet. Der erhaltene Anteil des Dotierstoffes lag zwischen 0,2 Gew.-% (Silber) und 2,25 Gew.-% (Kupfer plus Kobalt). Die Kristallstruktur des Katalysators wird durch die verschiedenen Dotierstoffe nicht beeinflusst (Figur 1a).

### Beispiel 2: Herstellung von NiFe-LDH

Die zweite Komponente, NiFe-LDH, wurde unter Verwendung einer mikrowellenunterstützten Synthese hergestellt, wobei eine Mischung aus Fe(NO)₃ x 9 H₂O und Ni(OAc)₂ x 4 H₂O in DMF/H₂O gelöst wurde und nach einer Vorschrift von Dresp et. al (S. Dresp, F. Luo, R. Schmack, S. Kühl, M. Gliech and P. Strasser, Energy Environ. Sc., 2016, 9, 2020-2024) umgesetzt wurde. Das XRD-Diffraktogramm ist in Figur 1b gezeigt.

### Beispiel 3: ORR-Aktivität von M:α-MnO₂; M = Co, Cu, Ag, Ni

Zur Bestimmung der ORR- und OER-Aktivitäten der undotierten und dotierten Manganoxide aus Beispiel 1 wurde ein Drei-Elektroden-RDE-Aufbau verwendet mit einem Platinnetz als Gegenelektrode, einer reversiblen Wasserstoffelektrode (RHE) als Referenzelektrode und einer glasartigen Kohlenstoffscheibe, die mit dem Katalysator als Arbeitselektrode beschichtet ist. Wie in Figur 2 dargestellt, ist das Kupfer-dotierte Manganoxid (Cu:α-MnO₂) das aktivste Katalysatormaterial hinsichtlich ORR dieser Reihe.

### Beispiel 4: ORR- und OER-Aktivität von Cu:α-MnO₂/Carbon/NiFe-LDH

Es wurde ein Dreikomponenten-Katalysator unter Verwendung des Cu:α-MnO₂ aus Beispiel 1 und des NiFe-LDH aus Beispiel 2 auf einem nichtmodifizierten Kohlenstoffträgermaterial (Vulcan XC-72R) hergestellt in einem Verhältnis von 1 : 1 : 1, bis 3 : 1 : 3 hergestellt. Zur Bestimmung der ORR- und OER-Aktivitäten des Katalysators wurde der Drei-Elektroden-RDE-Aufbau wie in Beispiel 3 verwendet. Zum Vergleich wurden die entsprechenden Aktivitäten der Einzelkomponenten Cu:α-MnO₂ und NiFe-LDH sowie eines kommerziellen Pt/C-Ir/C-Katalysators des Standes der Technik gemessen. In Figur 3a und 3b sind die elektrochemischen Aktivitäten hinsichtlich ORR bzw. OER dargestellt. Die Potentialdifferenz zwischen -3 mA cm⁻² (ORR) und 10 mA cm⁻² resultiert in einem Gesamtüberpotential von 0,7086 V ± 0,0011 V. Figur 4 zeigt die ORR- OER-Aktivitäten dieser Materialien nach elektrochemischer Belastung.

### Beispiel 5: Langzeitstabilität von Cu:α-MnO₂/Carbon/ NiFe-LDH

Die wichtigste Errungenschaft des erfindungsgemäßen Katalysatormaterials stellt seine Langzeitstabilität dar, die für den Katalysator nach Beispiel 4 ebenfalls in einem Dreielektroden-RDE-Messaufbau evaluiert wurde. Die galvanostatische Messung wurde bei einer konstanten Stromdichte von 4 mA cm⁻² für OER und -3 mA cm⁻² für ORR durchgeführt. Zwischen ORR und ORR relevanter Stromdichte wurde stündlich gewechselt. Die Ergebnisse der Stabilitätstestung sind in Figur 5 dargestellt.

### Beispiel 6: Herstellung von Chlorid- und Perchlorat-modifiziertem NiFe-LDH-(Cl⁻/ClO₄⁻)

Chlorid-Perchlorat-modifiziertes NiFe-LDH wurde wie in Song et al. beschrieben hergestellt (Song, F., et al., Exfoliation of layered double hydroxides for enhanced oxygen evolution catalysis. Nature Communications 2014, 5 (1)).

Für den Chloridaustausch wurden 100 mg der NiFe-Interkalationsverbindung in 100 mL einer gesättigten NaCI-Lösung dispergiert, welche mit 100 mL einer 0,01 M Salzsäurelösung (HCl) versetzt wird. Die resultierende Reaktionslösung wurde mit 600 rpm 24 h bei Raumtemperatur (RT) gerührt. Das Produkt (Chlorid-NiFe-Interkalationsverbindung; NiFe-LDH-Cl⁻) wurde mittels Zentrifugation aus der Dispersion getrennt, mit Wasser gewaschen und abschließend gefriergetrocknet.

Der Perchlorataustausch wurde mit der aus dem Chloridaustausch hervorgehenden NiFe-Interkalationsverbindung durchgeführt. Dafür wurden 100 mg des Ausgangsmaterials in 100 mL einer gesättigten NaClO₄-Lösung dispergiert und mit 100 mL einer 0,01 M HCl-Lösung versetzt. Die Reaktionslösung wurde mit 600 rpm 24 h bei RT gerührt. Das Produkt (Perchlorat-NiFe-Interkalationsverbindung; NiFe-LDH-ClO₄⁻) wurde durch Zentrifugation aus der Dispersion getrennt, mit Wasser gewaschen und abschließend gefriergetrocknet.

### Beispiel 7: Herstellung von N- und N/P-modifizierten Kohlenstoffträgermaterialien

Die Modifizierungen der kohlenstoffhaltigen Trägermaterialien wurden basierend auf den oben genannten Literaturvorschriften mit Vulcan XC-72R und mehrwandigen Carbonnanoröhren (MWCNTs) durchgeführt.

Dabei wurden das entsprechende kohlenstoffhaltige Trägermaterial (MWCNT) in einem ersten Schritt mittels konzentrierter Salzsäure gewaschen. Der zweite Schritt war eine Sauerstoffmodifikation der Materialien. Hierfür wurden pro Gramm kohlenstoffhaltigem Trägermaterial 100 mL Salpertersäure (HNO₃) verwendet. Die resultierende Reaktionslösung wurde für 2 bis 6 h bei 90 °C unter Rühren refluxiert. Das Produkt wurde mittels Zentrifugation von der Reaktionslösung abgetrennt, mit Reinstwasser (RW) gewaschen, bis der Überstand einen neutralen pH aufwies und abschließend durch Lyophilisation getrocknet.

Die Sauerstoff-modifizierten kohlenstoffhaltigen Trägermaterialien (OC) wurden nachfolgend durch Stickstoff und/oder Phosphor modifiziert. Um eine reine Stickstoffmodifikation durchzuführen wurden die OC in einer Ammonolyse-Reaktion bei 400 bis 800 °C für 2 bis 5 h mit NH₃ umgesetzt. Der Einbau von Stickstoff und Phosphor erfolgte durch die thermische Behandlung der OC bei 500 bis 800 °C für 2 bis 5 h in Gegenwart eines stickstoff- und phosphorhaltigem Prekursors.

### Beispiel 8: Herstellung von NiFe-LDH

NiFe-LDH, welches während der Synthese auf den aus Beispiel 7 beschriebenen kohlenstoffhaltigen Trägermaterialien aufgebracht wird, wurde wie in Dresp et al. beschrieben hergestellt (S. Dresp, F. Luo, R. Schmack, S. Kühl, M. Gliech and P. Strasser, Energy Environ. Sc., 2016, 9, 2020-2024). Dafür wurde ein kohlenstoffhaltiges Trägermaterial oder das kohlenstoffhaltiges Trägermaterial aus Beispiel 7 in DMF dispergiert, anschließend wurden die Metallprekursoren aus Beispiel 2, Fe(NO)₃ x 9 H₂O und Ni(OAc)₂ x 4 H₂O hinzugegeben. Die nachfolgende Synthese wurde wie in Beispiel 2 beschrieben durchgeführt. Das resultierende Katalysatormaterial kann durch den in Beispiel 6 angegebenen Chlorid- und Perchlorat-Anionenaustausch weiter modifiziert werden.

### Beispiel 9: ORR- und OER-Aktivität von Cu:α-MnO₂/mod.Carbon/NiFe-LDH-(Cl⁻/ClO₄⁻)

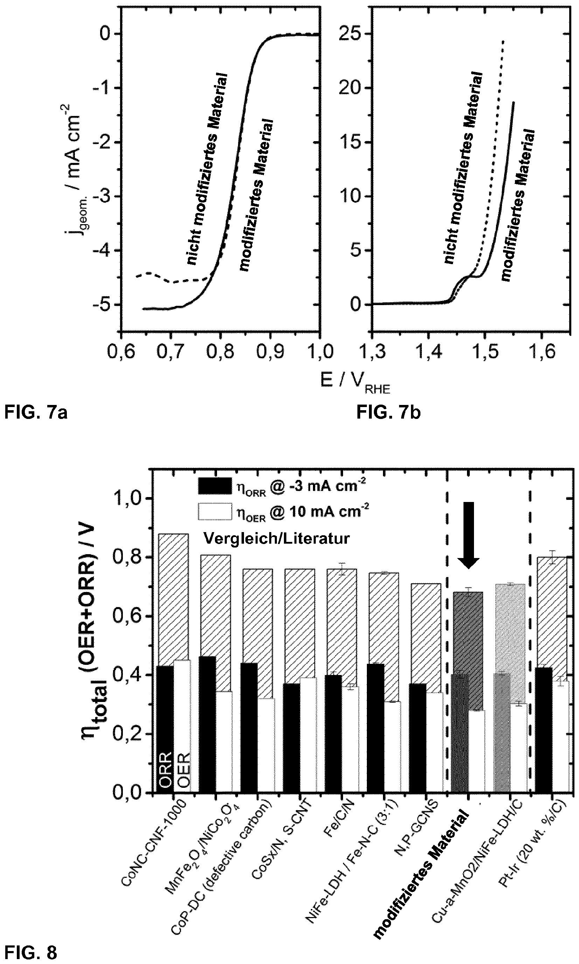

Unter Verwendung einer modifizierten NiFe-Interkalationsverbindung aus Beispiel 6 oder Beispiel 8, des Sauerstoff-, Stickstoff, Stickstoff- oder Phosphor-modifizierten Kohlenstoffträgermaterials aus Beispiel 7 sowie des Cu:α-MnO₂ aus Beispiel 3 wurde ein erfindungsgemäßer modifizierter Dreikomponenten-Katalysator Cu:α-MnO₂/mod.Carbon/NiFe-LDH-(Cl⁻/ClO₄⁻) hergestellt und, wie in Beispiel 4 beschrieben, die ORR- und OER-Aktivitäten gemessen. In Figur 7a und 7b sind die elektrochemischen Aktivitäten des modifizierten Katalysators *(modified material)* im Vergleich zum nichtmodifizierten Katalysator Cu:α-MnO₂/Carbon/NiFe-LDH (*primary material*) hinsichtlich ORR bzw. OER dargestellt. Es ist erkennbar, dass durch die Modifizierungen die elektrokatalytische Stabilität des Katalysatormaterials noch weiter verbessert wird.

In Figur 8 ist sind die elektrokatalytischen ORR- und OER-Aktivitäten (schwarze bzw. weiße Balken) sowie die Gesamtaktivität (schraffierte Balken) des modifizierten Katalysators Cu:α-MnO₂/mod.Carbon/NiFe-LDH-(Cl⁻/ClO₄⁻) *(modified material)* sowie des nichtmodifizierten Katalysators Cu:α-MnO₂/Carbon/NiFe-LDH (*primary material*) im Vergleich zu anderen literaturbekannten bifunktionellen ORR/OER-Katalysatorsystemen gezeigt. Die Charakterisierung erfolgte jeweils anhand des Überpotentials für die Bereitstellung von -3 mA cm⁻² (ORR) und 10 mA cm⁻² (OER).

### Beispiel 10: ORR- und OER-Aktivität von Cu:α-MnO₂/mod.Carbon/NiFe-LDH-(Cl⁻/ClO₄⁻)

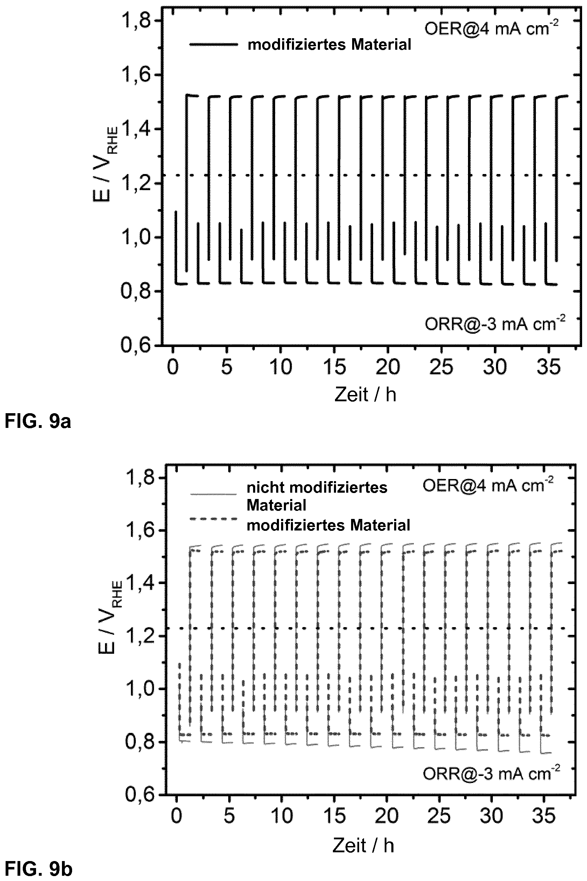

Die elektrokatalytische Langzeitstabilität des modifizierten Katalysators Cu:α-MnO₂/mod.Carbon/NiFe-LDH-(Cl⁻/ClO₄⁻) aus Beispiel 9_wurde wie in Beispiel 5 beschrieben gemessen. Das Ergebnis ist in Figur 9a gezeigt, wobei Figur 9b das Ergebnis der gleichen Messung im Vergleich zum nicht modifizierten Katalysator verdeutlicht.

### Bezugszeichenliste

- 100: kombinierte Brennstoffzelle
- 1: Membran
- 2: Elektrode
- 3: Gasdiffusionsschicht - GDL
- 4: Flussfeld
- 5: Bipolarplatte - BPP
- 6: Membran-Elektroden-Einheit - MEA

- 10: Flussrichtung Betrieb Brennstoffzelle
- 11: Flussrichtung Betrieb reversible Brennstoffzelle

## Patentansprüche

1. Katalysatormaterial für eine Brennstoffzelle oder einen Elektrolyseur, umfassend ein Mehrkomponentensystem aufweisend
- ein mit einem Dotanten M dotiertes Manganoxid,
- eine NiFe-Interkalationsverbindung, und
- ein leitfähiges kohlenstoffhaltiges Trägermaterial, auf welchem das dotierte Manganoxid und die NiFe-Interkalationsverbindung mittelbar oder unmittelbar angeordnet sind.

2. Katalysatormaterial nach Anspruch 1, wobei das dotierte Manganoxid ein als Cryptomelan-Typ vorliegendes Mangandioxid entsprechend der Formel M:α-MnO₂ ist.

3. Katalysatormaterial nach einem der vorhergehenden Ansprüche, wobei der Dotant M ausgewählt ist aus der Gruppe Eisen, Nickel, Kupfer, Silber und/oder Kobalt.

4. Katalysatormaterial nach einem der vorhergehenden Ansprüche, wobei der Dotant M zu einem Anteil im Bereich von 0,1 bis 3,5 Gew.-%, insbesondere im Bereich von 0,2 bis 3,35 Gew.-%, im Manganoxid enthalten ist.

5. Katalysatormaterial nach einem der vorhergehenden Ansprüche, wobei die NiFe-Interkalationsverbindung ein NiFe-LDH ist, das insbesondere einen 1,5-fachen bis 5-fachen Gewichtsanteil an Nickel bezogen auf Eisen aufweist.

6. Katalysatormaterial nach einem der vorhergehenden Ansprüche, wobei die NiFe-Interkalationsverbindung eine durch Anionenaustausch modifizierte NiFe-Interkalationsverbindung ist.

7. Katalysatormaterial nach einem der vorhergehenden Ansprüche, wobei das leitfähige kohlenstoffhaltige Trägermaterial ausgewählt ist aus Ruß, Graphen, nanostrukturiertem Kohlenstoff, Kohlenstoffnanoröhrchen und/oder einem carbonisiertem Trägerpartikel.

8. Katalysatormaterial nach einem der vorhergehenden Ansprüche, wobei das leitfähige kohlenstoffhaltige Trägermaterial eine Modifikation durch Sauerstoff, Stickstoff und/oder Phosphor aufweist.

9. Katalysatormaterial nach einem der vorhergehenden Ansprüche, wobei die NiFe-Interkalationsverbindung unmittelbar auf dem leitfähigen kohlenstoffhaltigen Trägermaterial aufgewachsen ist.

10. Elektrode, insbesondere Sauerstoffelektrode für eine Brennstoffzelle oder einen Elektrolyseur, aufweisend ein Katalysatormaterial nach einem der Ansprüche 1 bis 9.

11. Brennstoffzelle, Elektrolyseur, regenerative Brennstoffzelle oder reversibler Elektrolyseur aufweisend eine lonenaustauschmembran, die zumindest einseitig mit einem Katalysatormaterial nach einem der Ansprüche 1 bis 9 beschichtet ist.

12. Verfahren zum Herstellen eines Katalysatormaterials nach einem der Ansprüche 1 bis 9, umfassend die folgenden Schritte in der angegebenen Reihenfolge;
- Bereiten einer Mischung aus einem dotierten Manganoxid, einer NiFe-Interkalationsverbindung sowie einem leitfähigen kohlenstoffhaltigen Trägermaterial durch Vermengen,
- Bereiten einer Katalysatordispersion aus der Mischung durch Zugabe von Wasser, einem organischen Lösungsmittel und optional einem Bindemittel und
- Auftragen der Katalysatordispersion auf ein Substrat.

13. Verfahren nach Anspruch 12, wobei Wasser 70 bis 80 Gewichtsanteile, das organische Lösungsmittel 15 bis 25 Gewichtsanteile und das Bindemittel 2 bis 5 Gewichtsanteile bezogen auf die Summe der Komponenten Wasser, organisches Lösungsmittel und Bindemittel aufweisen oder Wasser 0,5 bis 5 Gewichtsanteile, das organische Lösungsmittel 95 bis 98,5 Gewichtsanteile bezogen auf die Summe der Komponenten Wasser und organisches Lösungsmittel aufweisen und Feststoff und Bindemittel in einem Verhältnis von 5:3 bis 7:3 in dem Gemisch aus Wasser und organischem Lösungsmittel vorliegen.

14. Verfahren nach einem der Ansprüche 12 oder 13, wobei das Bindemittel ein perfluoriertes Sulfonsäurepolymer und/oder eine quaternäre Ammonium-Verbindung, insbesondere ein gedoptes Polysulfon, ist.

15. Verfahren nach einem der Ansprüche 12 bis 14, wobei das Substrat eine Gasdiffusionsschicht oder eine Membran, insbesondere eine lonenaustauschmembran, ist.

## Claims

1. A catalyst material for a fuel cell or an electrolyser, comprising a multi-component system comprising
- a manganese oxide doped with a dopant M,
- a NiFe intercalation compound, and
- a conductive carbon-containing carrier material on which the doped manganese oxide and the NiFe intercalation compound are directly or indirectly arranged.

2. The catalyst material according to Claim 1, wherein the doped manganese oxide is a cryptomelane-type manganese dioxide according to the formula M:α-MnO₂.

3. The catalyst material according to any of the preceding claims, wherein the dopant M is selected from the group of iron, nickel, copper, silver and/or cobalt.

4. The catalyst material according to any of the preceding claims, wherein the dopant M is contained in the manganese oxide in a proportion in the range from 0.1 to 3.5 wt%, in particular in the range from 0.2 to 3.35 wt%.

5. The catalyst material according to any of the preceding claims, wherein the NiFe intercalation compound is a NiFe-LDH, which in particular has 1.5 to 5 times the proportion by weight of nickel in relation to iron.

6. The catalyst material according to any of the preceding claims, wherein the NiFe intercalation compound is a NiFe intercalation compound modified by anion exchange.

7. The catalyst material according to any of the preceding claims, wherein the conductive carbon-containing carrier material is selected from carbon black, graphene, nanostructured carbon, carbon nanotubes and/or a carbonised carrier particle.

8. The catalyst material according to any of the preceding claims, wherein the conductive carbon-containing carrier material is modified by oxygen, nitrogen and/or phosphorus.

9. The catalyst material according to any of the preceding claims, wherein the NiFe intercalation compound is grown directly on the conductive carbon-containing carrier material.

10. An electrode, in particular an oxygen electrode, for a fuel cell or an electrolyser, including a catalyst material according to any of the claims 1 to 9.

11. A Fuel cell, an electrolyser, a regenerative fuel cell or a reversible electrolyser including an ion exchange membrane which is coated at least on one side with a catalyst material according to any of the claims 1 to 9.

12. A method for producing a catalyst material according to any of the claims 1 to 9, comprising the following steps in the specified order:
- preparing a mixture of a doped manganese oxide, a NiFe intercalation compound and a conductive carbon-containing carrier material by means of blending,
- preparing a catalyst dispersion from the mixture by adding water, an organic solvent and optionally a binder, and
- applying the catalyst dispersion to a substrate.

13. The method according to Claim 12, wherein there are 70 to 80 parts by weight of water, 15 to 25 parts by weight of the organic solvent and 2 to 5 parts by weight of the binder in relation to the sum of the components water, organic solvent and binder, or there are 0.5 to 5 parts by weight of water and 95 to 98.5 parts by weight of the organic solvent in relation to the sum of the components water and organic solvent, and the solids and the binder are present in a ratio from 5:3 to 7:3 in the mixture of water and the organic solvent.

14. The method according to any of the claims 12 or 13, wherein the binder is a perfluorinated sulfonic acid polymer and/or a quaternary ammonium compound, in particular a doped polysulfone.

15. The method according to any of the claims 12 to 14, wherein the substrate is a gas diffusion layer or a membrane, in particular an ion exchange membrane.

## Revendications

1. Matériau catalyseur pour une pile à combustible ou un électrolyseur, comprenant un système multicomposant, présentant
- un oxyde de manganèse dopé avec un dopant M,
- un composé d'intercalation NiFe, et
- un matériau support carboné conducteur sur lequel l'oxyde de manganèse dopé et le composé d'intercalation NiFe sont disposés indirectement ou directement.

2. Matériau catalyseur selon la revendication 1, l'oxyde de manganèse dopé étant un oxyde de manganèse de type cryptomélane, de formule M:α-MnO₂.

3. Matériau catalyseur selon l'une des revendications précédentes, le dopant M étant sélectionné parmi le groupe se composant de fer, nickel, cuivre, argent et/ou cobalt.

4. Matériau catalyseur selon l'une des revendications précédentes, le dopant M étant compris dans l'oxyde de manganèse avec une teneur dans la plage de 0,1 à 3,5 % massique, en particulier dans la plage de 0,2 à 3,35 % massique.

5. Matériau catalyseur selon l'une des revendications précédentes, le composé d'intercalation NiFe étant un HDL NiFe, lequel présente en particulier un rapport en poids du nickel par rapport au fer de 1,5 à 5 fois.

6. Matériau catalyseur selon l'une des revendications précédentes, le composé d'intercalation NiFe étant un composé d'intercalation NiFe modifié par échange d'anions.

7. Matériau catalyseur selon l'une des revendications précédentes, le matériau support carboné conducteur étant sélectionné parmi le groupe se composant de noir de carbone, graphène, carbone nanostructuré, nanotubes de carbone et/ou d'une particule support carbonaté.

8. Matériau catalyseur selon l'une des revendications précédentes, le matériau support carboné conducteur présentant une modification par l'oxygène, l'azote et/ou le phosphore.

9. Matériau catalyseur selon l'une des revendications précédentes, le composé d'intercalation NiFe étant directement déposé sur le matériau support carboné conducteur.

10. Électrode, en particulier électrode à oxygène pour une pile à combustible ou un électrolyseur, présentant un matériau catalyseur selon une des revendications 1 à 9.

11. Pile à combustible, électrolyseur, pile à combustible régénératrice ou électrolyseur réversible présentant une membrane échangeuse d'ions, laquelle est revêtue au moins sur un côté avec un matériau catalyseur selon l'une des revendications 1 à 9.

12. Procédé pour la fabrication d'un matériau catalyseur selon l'une des revendications 1 à 9, comprenant les étapes suivantes, dans l'ordre indiqué ;
- préparation d'un mélange composé d'un oxyde de manganèse dopé, d'un composé d'intercalation NiFe ainsi que d'un matériau support carboné conducteur, par mélange,
- préparation d'une dispersion de catalyseur à partir du mélange par addition d'eau, d'un solvant organique et facultativement d'un liant, et
- application de la dispersion de catalyseur sur un substrat.

13. Procédé selon la revendication 12, l'eau présentant de 70 à 80 parties en poids, le solvant organique de 15 à 25 parties en poids et le liant de 2 à 5 parties en poids rapporté à la somme des composants eau, solvant organique et liant, ou l'eau présentant de 0,5 à 5 parties en poids, le solvant organique de 95 à 98,5 parties en poids, rapporté à la somme des composants eau et et solvant organique, et la matière solide et le liant étant présents avec un rapport de 5:3 à 7:3 dans le mélange d'eau et de solvant organique.

14. Procédé selon l'une des revendications 12 ou 13, le liant étant un polymère d'acide sulfonique perfluoré et/ou un composé ammonium quaternaire, en particulier un polysulfone dopé.

15. Procédé selon l'une des revendications 12 à 14, le substrat étant une couche de diffusion de gaz ou une membrane, en particulier une membrane échangeuse d'ions.
